# EUROPEAN PATENT APPLICATION

(11) **EP 4 815 048 A1**
(43) Date of publication of application: **30.09.2026**
(21) Application number: 26167817.1
(22) Date of filing: 25.03.2026
(51) Int. Cl.: H01M 4/131, H01M 4/36, H01M 4/525

(54) **POSITIVE ELECTRODE ACTIVE MATERIALS, POSITIVE ELECTRODES, AND RECHARGEABLE LITHIUM BATTERIES**

(30) Priority: 28.03.2025 KR 20250040618; 20.03.2026 KR 20260050592
(71) Applicant: SAMSUNG SDI CO., LTD., Yongin-si, Gyeonggi-do 17084 (KR)
(72) Inventor: CHAE, Youngjoo, 17084 Yongin-si (KR)
(74) Representative: Maiwald GmbH

(57) **Abstract**

A positive electrode active material includes a first positive electrode active material having an average particle diameter (D₅₀) of greater than or equal to about 10 µm and less than or equal to about 30 µm, with the first positive electrode active material including a first lithium nickel-based composite oxide. The positive electrode active material further comprises a second positive electrode active material having an average particle diameter (D₅₀) of greater than or equal to about 5 µm and less than about 10 µm, with the second positive electrode active material including a second lithium nickel-based composite oxide. The positive electrode active material still further comprises a third positive electrode active material having an average particle diameter (D₅₀) of greater than or equal to about 0.1 µm and less than about 5 µm, with the third positive electrode active material including a third lithium nickel-based composite oxide. Based on a total weight of the positive electrode active material, a sum weight of the second positive electrode active material and the third positive electrode active material is greater than about 20 wt% and less than about 40 wt%. A powder flow rate measured at 9 kPa using rheometer by adding 200 ml of the positive electrode active material to a 300 ml vessel, fixing the vessel to a device, and moving a blade counterclockwise at a speed of 100 mm/s is greater than or equal to about 4.2.

## Description

### BACKGROUND

### 1. Field

Positive electrode active materials, positive electrodes, and rechargeable lithium batteries are disclosed.

### 2. Description of the Related Art

Portable information devices such as cell phones, laptop computers, smart phones, and the like use rechargeable lithium batteries. Electric vehicles use rechargeable lithium batteries having high energy density as a driving power source. Research has been conducted in the use of rechargeable lithium batteries with high energy density as a driving power source for hybrid or electric vehicles or power storage power source.

Various positive electrode active materials have been developed for rechargeable lithium batteries. Among such materials, lithium nickel-based composite oxides (e.g., lithium nickel manganese cobalt oxide, lithium nickel cobalt aluminum oxide, etc.), lithium cobalt oxide, and lithium iron phosphate compounds are often used as positive electrode active materials.

Among these, lithium nickel-based composite oxides have been developed to achieve high energy density. But the capacity of lithium nickel-based composite oxides can vary depending on the sizes and shapes of the particles. Accordingly, a bimodal type of positive electrode active material that includes both large and small particles has been used. However, in the bimodal type of positive electrode active material powder flowability is poor, so there are limitations on energy density and efficiency.

### SUMMARY

Embodiments of the present disclosure provide a positive electrode active material having improved powder flowability, increased pellet density, and reduced principal stress.

Embodiments of the present disclosure provide a positive electrode and a rechargeable lithium battery having improved energy density and efficiency and reduced resistance by including the positive electrode active material.

In some embodiments, a positive electrode active material includes a first positive electrode active material having an average particle diameter (D₅₀) of about 10 µm to about 30 µm, with the first positive electrode active material including a first lithium nickel-based composite oxide, a second positive electrode active material having an average particle diameter (D₅₀) of greater than or equal to about 5 µm and less than about 10 µm, with the second positive electrode active material including a second lithium nickel-based composite oxide, and a third positive electrode active material having an average particle diameter (D₅₀) of greater than or equal to about 0.1 µm and less than about 5 µm, with the third positive electrode active material including a third lithium nickel-based composite oxide, wherein, based on a total weight of the positive electrode active material, a sum weight of the second positive electrode active material and the third positive electrode active material is greater than about 20 wt% and less than about 40 wt%, and a powder flow rate (Flow Function, FF) measured at 9 kPa using a rheometer by adding 200 ml of the positive electrode active material to a 300 ml vessel, fixing the vessel to a device, and moving a blade counterclockwise at a speed of 100 mm/s is greater than or equal to about 4.2.

Some embodiments of the present disclosure provide a positive electrode including a positive electrode current collector, and a positive electrode active material layer disposed on the positive electrode current collector and including the positive electrode active material.

Some embodiments of the present disclosure provide a rechargeable lithium battery including the aforementioned positive electrode, a negative electrode, and an electrolyte.

The positive electrode active material according to some embodiments may have improved powder flowability, increased pellet density, and reduced principal stress by including three types of positive electrode active materials having different average particle diameters at a specific weight ratio.

A positive electrode and a rechargeable lithium battery including the positive electrode active material may achieve high energy density and high efficiency.

### BRIEF DESCRIPTION OF THE DRAWINGS

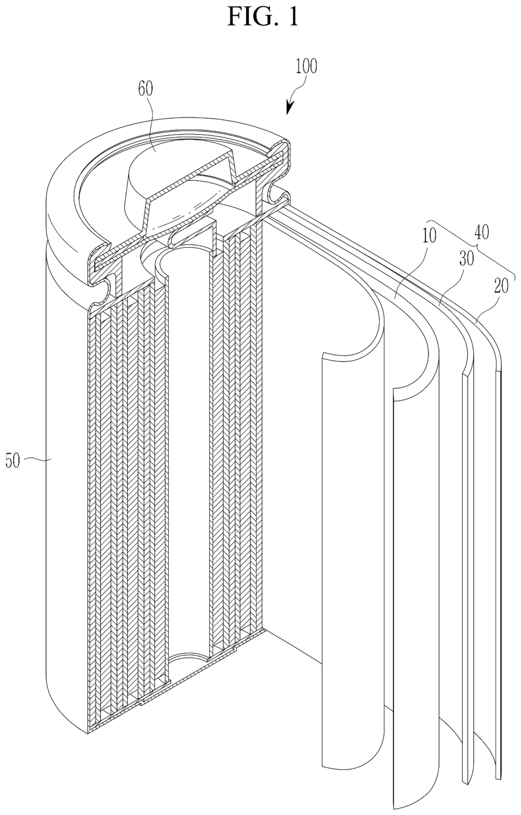

FIGS. 1 to 4 are schematic views showing rechargeable lithium batteries according to embodiments of the present disclosure.

### DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

An average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. As used herein, when a definition is not otherwise provided, the average particle diameter (D₅₀) means a diameter of particles having a cumulative volume of 50 vol% in the particle size distribution that is obtained by measuring the size (diameter or major axis length) of 20 particles at random in a scanning electron microscope image. Herein, the diameter is measured for spherical particles, whereas the major axis length is measured for non-spherical particles. The volume of each particle is calculated using the value measured as the diameter or the length of the major axis and assuming a spherical shape of the particle.

Herein, "or" is not to be construed as an exclusive meaning, for example, "A or B" is construed to include A, B, A+B, and the like.

"Metal" includes ordinary metals, transition metals and metalloids (semi-metals). As used herein, the term "metalloid" refers to an element having properties intermediate between those of metals and non-metals. Examples of the metalloid include, but are not limited to, boron (B), silicon (Si), germanium (Ge), arsenic (As), antimony (Sb), and tellurium (Te).

### Positive Electrode Active Material

A positive electrode active material according to embodiments of the present disclosure includes a first positive electrode active material having an average particle diameter (D₅₀) of greater than or equal to about 10 µm and less than or equal to about 30 µm and including a first lithium nickel-based composite oxide, a second positive electrode active material having an average particle diameter (D₅₀) of greater than or equal to about 5 µm and less than about 10 µm and including a second lithium nickel-based composite oxide, and a third positive electrode active material having an average particle diameter (D₅₀) of greater than or equal to about 0.1 µm and less than about 5 µm and including a third lithium nickel-based composite oxide, wherein a sum weight of the second positive electrode active material and the third positive electrode active material is greater than about 20 wt% and less than about 40 wt% based on a total weight of the positive electrode active material, and a powder flow rate (Flow Function, FF) measured at 9 kPa using an FT4 Powder Rheometer (Freeman Technologies), with 200 ml of the positive electrode active material in a 300 ml vessel, fixing the vessel to a device, and moving a blade counterclockwise at a speed of 100 mm/s is greater than or equal to about 4.2.

To achieve high energy density, lithium nickel-based composite oxide positive electrode active materials with high specific capacity are most often used. When using the lithium nickel-based composite oxides, as the number of charge and discharge cycles increases, arrangement of the primary particles becomes misaligned such that gaps between the primary particles widening due to the repeated volume expansion of the crystal structure. This causes the increased shrinkage and expansion of the secondary particles and increased shrinkage and expansion of the positive electrode including the secondary particles. This may cause structural cracking and destruction of secondary particles and positive electrodes and cause disconnection of the electrochemical charge transfer network. This may result in charge imbalance and also increase an area for side reactions with the electrolyte, which in turn may lead to deterioration of the charge/discharge cycle-life.

To solve such problems, various studies have been conducted to alleviate a volume change of lithium nickel-based composite oxides after repeated charge/discharge cycles and to minimize the stress generated due to the volume change to thereby preventing particle damage.

To achieve high capacity, a bimodal type of positive electrode active material may be used, which is a mixture of small and large particles, with the small and large particles having different average particle diameters. This bimodal type of positive electrode active material may fill pores between the large particles with small particles having relatively small average particle diameters, thereby improving the integration density of the lithium nickel-based composite oxide within a unit volume and thereby increasing the energy density per unit volume. However, even when using a bimodal type of positive electrode active material, there is still a problem of low powder flowability. Here, the powder flowability indicates a powder's ability to move. As the powder flowability decreases, the contact area between particles decreases, which may result in high resistance during battery evaluation, particle breakage when pressure is applied, and low inter-particle pore filling rate.

The present disclosure describes a trimodal type positive electrode active material with high powder flowability. The trimodal type positive electrode active material has low resistance due to increased contact area between particles, and allows particles to fill the pores between particles rather than breaking when pressure is applied, with little movement of particles. The trimodal type positive electrode active material is a mixture of three types of positive electrode active materials with different average particle diameters at a specific ratio, and the trimodal type positive electrode active material may be a mixture of small particles, medium particles, and large particles. The trimodal type positive electrode active materials may have increased pellet density, reduced principal stress, and superior powder flowability compared to existing bimodal type positive electrode active materials. Accordingly, a positive electrode and a rechargeable lithium battery including the trimodal type positive electrode active material may have improved energy density and efficiency and reduced resistance as compared to a positive electrode and a rechargeable lithium battery including a bimodal-type positive electrode active material.

In particular, by controlling the amount of medium and small particles in the trimodal type, the pellet density may be increased, the principal stress may be reduced, and the powder flowability may be improved compared to the bimodal-type positive electrode active material and also compared to a trimodal type positive electrode active material that is unlike the materials described herein. In some examples, the sum weight of the second positive electrode active material and the third positive electrode active material may be about 21 wt% to about 39 wt%, about 22 wt% to about 38 wt%, about 23 wt% to about 37 wt%, about 24 wt% to about 36 wt%, about 25 wt% to about 35 wt%, about 26 wt% to about 34 wt%, about 28 wt% to about 32 wt%, or about 30 wt%, based on a total weight of the positive electrode active material. Meanwhile, if the sum weight of the second positive electrode active material and the third positive electrode active material is out of these ranges, the pellet density of the positive electrode active material may decrease, the principal stress may increase, and/or the powder flow rate may decrease.

The powder flow rate of the positive electrode active material may be, for example, about 4.2 to about 5.5, about 4.25 to about 5.3, about 4.3 to about 5.2, about 4.35 to about 5.1, about 4.4 to about 5, about 4.45 to about 4.9, or about 4.45 to about 4.85. The powder flow rate of the positive electrode active material may be measured using an FT4 Powder Rheometer (Freeman Technologies). Specifically, the measurement may be performed at at 9 kPa by loading 200 ml of the positive electrode active material into a 300 ml vessel, fixing the vessel to the device, and moving a blade counterclockwise at a speed of 100 mm/s. The measurement may be repeated a total of three times, and the average of the three values may be calculated. In this case, the powder flow rate may be an average powder flow rate. The powder flow rate may be a Flow Function (FF) value calculated based on the flow resistance generated by interactions of powder particles when a blade passes through a powder bed. The Flow Function (FF) may be defined by Equation 1 as a value obtained by dividing a major principal stress (σ₁) by an unconfined yield strength (oc) of the powder, and may be a dimensionless value representing flow characteristics of the powder. A positive electrode active material according to embodiments of the present disclosure is a trimodal type including the large particle first positive electrode active material, medium particle second positive electrode active material, and small particle third positive electrode active material in a specific amount ratio, and the powder flowability is in the above ranges. The positive electrode including the positive electrode active material satisfying the powder flow rate range may have an increased mixture density. And a rechargeable lithium battery including the positive electrode may have improved initial charge/discharge capacity and efficiency, may have significantly reduced DC-IR, and may have improved resistance. $FF = {σ}_{1} / {σ}_{C}$ where σ₁ may represent a major principal stress when the powder is in a compressed state, and σc may represent an unconfined yield strength at which the powder begins to collapse without external confinement.

The positive electrode active material may have a pellet density of about 3.6 g/cc to about 4 g/cc, for example, about 3.6 g/cc to about 3.9 g/cc, about 3.6 g/cc to about 3.8 g/cc, or about 3.6 g/cc to about 3.7 g/cc. The pellet density of the positive electrode active material may be measured after pressurizing 3 g of the positive electrode active material at a pressure of 5 tons for 30 seconds. The positive electrode active material may achieve a pellet density within the above-described ranges by including the aforementioned first, second, and third positive electrode active materials in a specific weight ratio. If the pellet density of the positive electrode active material satisfies the above ranges, the positive electrode active material may be filled at a high density, and the capacity of the positive electrode including the positive electrode active material may be increased. Additionally, rechargeable lithium batteries including the positive electrode may have improved energy density and efficiency and have reduced resistance. The pellet density may be measured from the pellet thickness and the diameter of the mold after placing 3 g of the positive electrode active material into a pellet manufacturing mold and maintaining 5 tons of pressure on the positive electrode active material for 30 seconds.

The principal stress of the positive electrode active material may be less than or equal to about 20 kPa, for example, less than or equal to about 19 kPa, less than or equal to about 18 kPa, less than or equal to about 17 kPa, less than or equal to about 16 kPa, less than or equal to about 15 kPa, less than or equal to about 14 kPa, or less than or equal to about 13.6 kPa. In further examples, the principal stress of the positive electrode active material may be about 1 kPa to about 20 kPa, about 2 kPa to about 20 kPa, about 3 kPa to about 20 kPa, about 5 kPa to about 20 kPa, about 6 kPa to about 20 kPa, about 8 kPa to about 20 kPa, about 9 kPa to about 20 kPa, about 10 kPa to about 19 kPa, or about 12 kPa to about 19 kPa. The principal stress is obtained by measuring force resisted inside the positive electrode active material (i.e., internal force) when an external force or moment is applied to the positive electrode active material and dividing this value by the area. A high principal stress means an increase in the coefficient of friction, and an increase in the coefficient of friction means a decrease in the ability of particles to move, which is disadvantageous in terms of density, which in turn can mean a decrease in energy density. The principal stress of the positive electrode active material may be measured using a powder shear tester, for example, a shear cell or a powder rheology analyzer. The principal stress of the positive electrode active material may be measured, for example, using an FT4 Powder Rheometer (Freeman Technologies). Specifically, the measurement may be performed at at 9 kPa by loading 200 ml of the positive electrode active material into a 300 ml vessel, fixing the vessel to the device, and moving a blade counterclockwise at a speed of 100 mm/s. The measurement may be repeated three times, and the average of the three values may be calculated. In this case, the principal stress may be an average principal stress. If the principal stress of the positive electrode active material is in the above ranges, the particles in the positive electrode active material may move relatively freely, i.e., the powder flowability is high, and, thus, a positive electrode with low resistance and high stability due to less particle breakage even under pressure may be provided. And the performance of a rechargeable lithium battery including the positive electrode may be improved.

Hereinafter, each of the first positive electrode active material, the second positive electrode active material, and the third positive electrode active material will be described in detail.

### First Positive Electrode Active Material

The first positive electrode active material may have an average particle diameter (D₅₀) of about 10 µm to about 30 µm and includes a first lithium nickel-based composite oxide. The first positive electrode active material may be large particles.

The first positive electrode active material may be in a form of particles or may be in a form of secondary particles that are agglomerations of primary particles. The average particle diameter (D₅₀) of the first positive electrode active material may be the average particle diameter (D₅₀) of the secondary particles.

The average particle diameter (D₅₀) of the first positive electrode active material may be, for example, about 10 µm to about 25 µm, about 10 µm to about 20 µm, about 10 µm to about 15 µm, about 11 µm to about 14 µm, or about 11.5 µm to about 13.5 µm. Here, the average particle diameter (D₅₀) may be obtained by randomly measuring the size (diameter or major axis length) of 20 particles in a scanning electron microscope image of the first positive electrode active materials in the positive electrode active material to obtain a particle size distribution, and taking the diameter of the particles having a cumulative volume of 50 vol% in the particle size distribution as the average particle diameter. Herein, the diameter is measured for spherical particles, whereas the major axis length is measured for non-spherical particles.

The first lithium nickel-based composite oxide, the second lithium nickel-based composite oxide, and the third lithium nickel-based composite oxide may be the same or different from each other. For example, the first lithium nickel-based composite oxide, the second lithium nickel-based composite oxide, and the third lithium nickel-based composite oxide may all have the same composition but differ only with respect to the average particle diameter (D₅₀), or two types of particles among the three types of particles may have the same composition and the other type of particle may have a different composition, or the compositions of the three types of particles may all be different from each other.

The first lithium nickel-based composite oxide may be represented by Chemical Formula 1:

[Chemical Formula 1] Liₐ₁Niₓ₁M¹_{y1}M²_{z1}O_{2-b1}X_{b1}

In Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are different and are each independently Al, B, Ba, Ca, Ce, Co, Cr, Cu, Fe, Mg, Mn, Mo, Nb, Si, Sn, Sr, Ta, Ti, V, W, Y, Zn, Zr, or a combination thereof, and X is F, P, S, or a combination thereof. In further embodiments with Chemical Formula 1, 0.6≤x1≤1, 0≤y1≤0.4, and 0≤z1≤0.4, or 0.8≤x1≤1, 0≤y1≤0.2, and 0≤z1≤0.2, or 0.9≤x1<1, 0<y1≤0.1, and 0≤z1≤0.1.

The first lithium nickel-based composite oxide may be represented by the Chemical Formula 11 or Chemical Formula 12:

[Chemical Formula 11] Liₐ₁₁Niₓ₁₁Co_{y11}M¹¹_{z11}O_{2-b11}X_{b11}

In Chemical Formula 11, 0.9≤a11≤1.2, 0.8≤x11<1, 0<y11≤0.2, 0≤z11≤0.2, 0.9≤x11+y11+z11≤1.1, and 0≤b11≤0.1, M¹¹ is Al, B, Ba, Ca, Ce, Cr, Cu, Fe, Mg, Mn, Mo, Nb, Si, Sn, Sr, Ta, Ti, V, W, Y, Zn, Zr, or a combination thereof, and X is F, P, S, or a combination thereof. In further embodiments of Chemical Formula 11, 0.9≤x11≤0.99, 0.01≤y11≤0.1, and 0≤z11≤0.1.

[Chemical Formula 12] Liₐ₁₂Niₓ₁₂Co_{y12}M¹²_{z12}M¹³_{w12}O_{2-b12}X_{b12}

In Chemical Formula 12, 0.9≤a12≤1.2, 0.8≤x12≤0.98, 0.01≤y12≤0.19, 0.01≤z12≤0.19, 0≤w12≤0.19, 0.9≤x12+y12+z12+w12≤1.1, and 0≤b12≤0.1, M¹² is Al, Mn, or a combination thereof, M¹³ is B, Ba, Ca, Ce, Cr, Cu, Fe, Mg, Mo, Nb, Si, Sn, Sr, Ta, Ti, V, W, Y, Zn, Zr, or a combination thereof, M¹² and M¹³ are different from each other, and X is F, P, S, or a combination thereof. In further embodiments of Chemical Formula 12, 0.9≤x12≤0.98, 0.01≤y12≤0.09, 0.01≤z12≤0.09, and 0≤w12≤0.09.

The first lithium nickel-based composite oxide may be a high nickel-based positive electrode active material having a nickel content of greater than or equal to about 80 mol%, for example, greater than or equal to about 82 mol%, greater than or equal to about 85 mol%, greater than or equal to about 87 mol%, greater than or equal to about 90 mol%, or greater than or equal to about 91 mol%, and less than or equal to about 99 mol%, for example, less than or equal to about 95 mol% based on 100 mol% of the metal excluding lithium in first lithium nickel-based composite oxide. The high nickel-based positive electrode active material may provide high capacity and may be applied to high-capacity, high-density rechargeable lithium batteries.

Based on a total weight of the positive electrode active material, the first positive electrode active material may be included in an amount of greater than about 60 wt% and less than about 80 wt%, for example, about 62 wt% to about 78 wt%, about 64 wt% to about 76 wt%, about 65 wt% to about 75 wt%, about 66 wt% to about 74 wt%, about 68 wt% to about 72 wt%, or about 70 wt%. The amount of the first positive electrode active material may be obtained by subtracting the sum weight of the second positive electrode active material and the third positive electrode active material from the total weight of the positive electrode active material. **If** the weight of the first positive electrode active material in the positive electrode active material is in the above ranges, the pellet density of the positive electrode active material may increase, the principal stress may decrease, and the powder flow rate may increase. **If** the amount of the first positive electrode active material is out of the above ranges, the pellet density may decrease, the principal stress may increase, and/or the powder flow rate may decrease.

### Second Positive Electrode Active Material

The second positive electrode active material has an average particle diameter (D₅₀) of greater than or equal to about 5 µm and less than about 10 µm and includes a second lithium nickel-based composite oxide. The second positive electrode active material may be expressed as medium particles. According to some embodiments, by including the second positive electrode active material, the positive electrode active material may provide improved cycle-life characteristics while also providing high capacity and high energy density.

The second positive electrode active material may be in a form of particles, for example, secondary particles that are agglomerations of primary particles, or single particles. Here, the single particles exist alone without a grain boundary within the particles, are composed of one particle, and may be a single particle, a monolith structure, a one body structure, or a non-agglomerated particle, in which particles are not agglomerated with each other but exist as an independent phase in terms of morphology, and may be expressed as a single crystal The shape of the second positive electrode active material is not particularly limited and may be various shapes such as polyhedral, spherical, ellipsoidal, plate-shaped, rod-shaped, or irregular.

The average particle diameter (D₅₀) of the second positive electrode active material is less than the average particle diameter (D₅₀) of the first positive electrode active material and greater than the average particle diameter (D₅₀) of the third positive electrode active material. An average particle diameter (D₅₀) of the second positive electrode active material may be greater than or equal to about 5 µm and less than about 10 µm, for example, about 5 µm to about 9.5 µm, about 5 µm to about 9 µm, about 5 µm to about 8 µm, or about 5 µm to about 7 µm. Here, the average particle diameter (D₅₀) may be obtained by randomly measuring the size (diameter or major axis length) of 20 particles in a scanning electron microscope image of the second positive electrode active materials in the positive electrode active material to obtain a particle size distribution, and taking the diameter of the particles having a cumulative volume of 50 vol% in the particle size distribution as the average particle diameter. Herein, the diameter is measured for spherical particles, whereas the major axis length is measured for non-spherical particles. When the second positive electrode active material is secondary particles, the average particle diameter (D₅₀) of the second positive electrode active material may be an average particle diameter (D₅₀) of the secondary particles, and when the second positive electrode active material is single particles, the average particle diameter (D₅₀) of the second positive electrode active material may be the average particle diameter (D₅₀) of the single particles.

According to some embodiments, the second positive electrode active material may be in a form of single particles, and the average particle diameter (D₅₀) of the single particles is greater than or equal to about 5 µm and less than about 10 µm.

The second lithium nickel-based composite oxide may be represented by Chemical Formula 2:

[Chemical Formula 2] Liₐ₂Niₓ₂M³_{y2}M⁴_{z2}O_{2-b2}X_{b2}

In Chemical Formula 2, 0.9≤a2≤1.8, 0.3≤x2≤1, 0≤y2≤0.7, 0≤z2≤0.7, 0.9≤x2+y2+z2≤1.1, and 0≤b2≤0.1, M³ and M⁴ are different elements and are each independently Al, B, Ba, Ca, Ce, Co, Cr, Cu, Fe, Mg, Mn, Mo, Nb, Si, Sn, Sr, Ta, Ti, V, W, Y, Zn, Zr, or a combination thereof, and X is F, P, S, or a combination thereof. In further embodiments of Chemical Formula 2, 0.6≤x2≤1, 0≤y2≤0.4, and 0≤z2≤0.4, or 0.8≤x2≤1, 0≤y2≤0.2, and 0≤z2≤0.2, or 0.9≤x2<1, 0<y2≤0.1, and 0≤z2≤0.1.

The second lithium nickel-based composite oxide may be represented by Chemical Formula 21 or Chemical Formula 22:

[Chemical Formula 21] Liₐ₂₁Niₓ₂₁Co_{y21}M²¹_{z21}O_{2-b21}X_{b21}

In Chemical Formula 21, 0.9≤a21≤1.2, 0.8≤x21<1, 0<y21≤0.2, 0≤z21≤0.2, 0.9≤x21+y21+z21≤1.1, and 0≤b21≤0.1, M²¹ is Al, B, Ba, Ca, Ce, Cr, Cu, Fe, Mg, Mn, Mo, Nb, Si, Sn, Sr, Ta, Ti, V, W, Y, Zn, Zr, or a combination thereof, and X is F, P, S, or a combination thereof. In further embodiments with Chemical Formula 21, 0.9≤x21≤0.99, 0.01≤y21≤0.1, and 0≤z21≤0.1.

[Chemical Formula 22] Liₐ₂₂Niₓ₂₂Co_{y22}M²²_{z22}M²³_{w22}O_{2-b22}X_{b22}

In Chemical Formula 22, 0.9≤a22≤1.2, 0.8≤x22≤0.98, 0.01≤y22≤0.19, 0.01≤z22≤0.19, 0≤w22≤0.19, 0.9≤x22+y22+z22+w22≤1.1, and 0≤b22≤0.1, M²² is Al, Mn, or a combination thereof, M²³ is B, Ba, Ca, Ce, Cr, Cu, Fe, Mg, Mo, Nb, Si, Sn, Sr, Ta, Ti, V, W, Y, Zn, Zr, or a combination thereof, M²² and M²³ are different elements, and X is F, P, S, or a combination thereof. In further embodiments with Chemical Formula 22, 0.9≤x22≤0.98, 0.01≤y22≤0.09, 0.01≤z22≤0.09, and 0≤w22≤0.09.

The second lithium nickel-based composite oxide may be a high nickel-based positive electrode active material having a nickel content of greater than or equal to about 80 mol%, for example, greater than or equal to about 82 mol%, greater than or equal to about 85 mol%, greater than or equal to about 87 mol%, greater than or equal to about 90 mol%, or greater than or equal to about 91 mol%, and less than or equal to about 99 mol%, for example, less than or equal to about 95 mol% based on 100 mol% of the metal excluding lithium in second lithium nickel-based composite oxide. The high nickel-based positive electrode active material may provide high capacity and may be applied to high-capacity, high-density rechargeable lithium batteries.

### Third Positive Electrode Active Material

The above third positive electrode active material has an average particle diameter (D₅₀) of greater than or equal to about 0.1 µm and less than about 5 µm and includes a third lithium nickel-based composite oxide. The third positive electrode active material may be expressed as small particles.

The third positive electrode active material may be in a form of particles, may be in a form of secondary particles that are agglomerations of primary particles, or may be in a form of single particles. Here, the definition of single particles is as described above in the second positive electrode active material.

The average particle diameter (D₅₀) of the third positive electrode active material is less than the average particle diameter (D₅₀) of the second positive electrode active material. An average particle diameter (D₅₀) of the third positive electrode active material may be greater than or equal to about 0.1 µm and less than about 5 µm, for example about 0.1 µm to about 4.5 µm, about 0.1 µm to about 4 µm, about 0.1 µm to about 3.5 µm, or about 0.5 µm to about 3 µm. Here, the average particle diameter (D₅₀) may be obtained by randomly measuring the size (diameter or major axis length) of 20 particles in a scanning electron microscope image of the third positive electrode active materials in the positive electrode active material to obtain a particle size distribution, and taking the diameter of the particles having a cumulative volume of 50 vol% in the particle size distribution as the average particle diameter. Herein, the diameter is measured for spherical particles, whereas the major axis length is measured for non-spherical particles.

When the third positive electrode active material is secondary particles, the average particle diameter (D₅₀) of the third positive electrode active material may be an average particle diameter (D₅₀) of the secondary particles, and when the third positive electrode active material is single particles, the average particle diameter (D₅₀) of the third positive electrode active material may be the average particle diameter (D₅₀) of the single particles.

According to some embodiments, the third positive electrode active material may be in the form of single particles, and the average particle diameter (D₅₀) of the single particles is greater than or equal to about 0.1 µm and less than 5 µm.

The third lithium nickel-based composite oxide may be represented by Chemical Formula 3:

[Chemical Formula 3] Liₐ₃Niₓ₃M⁵_{y3}M⁶_{z3}O_{2-b3}X_{b3}

In Chemical Formula 3, 0.9≤a3≤1.8, 0.3≤x3≤1, 0≤y3≤0.7, 0≤z3≤0.7, 0.9≤x3+y3+z3≤1.1, and 0≤b3≤0.1, M⁵ and M⁶ are different from each other and are each independently Al, B, Ba, Ca, Ce, Co, Cr, Cu, Fe, Mg, Mn, Mo, Nb, Si, Sn, Sr, Ta, Ti, V, W, Y, Zn, Zr, or a combination thereof, and X is F, P, S, or a combination thereof. In further embodiments with Chemical Formula 3, 0.6≤x3≤1, 0≤y3≤0.4, and 0≤z3≤0.4, or 0.8≤x3≤1, 0≤y3≤0.2, and 0≤z3≤0.2, or 0.9≤x3<1, 0<y3≤0.1, and 0≤z3≤0.1.

The third lithium nickel-based composite oxide may be represented by Chemical Formula 31 or Chemical Formula 32:

[Chemical Formula 31] Liₐ₃₁Niₓ₃₁Co_{y31}M²³¹_{z31}O_{2-b31}X_{b31}

In Chemical Formula 31, 0.9≤a31≤1.2, 0.8≤x31<1, 0<y31≤0.2, 0≤z31≤0.2, 0.9≤x31+y31+z31≤1.1, and 0≤b31≤0.1, M³¹ is Al, B, Ba, Ca, Ce, Cr, Cu, Fe, Mg, Mn, Mo, Nb, Si, Sn, Sr, Ta, Ti, V, W, Y, Zn, Zr, or a combination thereof, and X is F, P, S, or a combination thereof. In further embodiments with Chemical Formula 31, 0.9≤x31≤0.99, 0.01≤y31≤0.1, and 0≤z31≤0.1.

[Chemical Formula 32] Liₐ₃₂Niₓ₃₂Co_{y32}M³²_{z32}M³³_{w32}O_{2-b32}X_{b32}

In Chemical Formula 32, 0.9≤a32≤1.2, 0.8≤x32≤0.98, 0.01≤y32≤0.19, 0.01≤z32≤0.19, 0≤w32≤0.19, 0.9≤x32+y32+z32+w32≤1.1, and 0≤b32≤0.1, M³² is Al, Mn, or a combination thereof, M³³ is B, Ba, Ca, Ce, Cr, Cu, Fe, Mg, Mo, Nb, Si, Sn, Sr, Ta, Ti, V, W, Y, Zn, Zr, or a combination thereof, and M³² and M³³ are different elements, and X is F, P, S, or a combination thereof. In further embodiments of Chemical Formula 32, 0.9≤x32≤0.98, 0.01≤y32≤0.09, 0.01≤z32≤0.09, and 0≤w32≤0.09.

The third lithium nickel-based composite oxide may be a high nickel-based positive electrode active material having a nickel content of greater than or equal to about 80 mol%, for example, greater than or equal to about 82 mol%, greater than or equal to about 85 mol%, greater than or equal to about 87 mol%, greater than or equal to about 90 mol%, or greater than or equal to about 91 mol%, and less than or equal to about 99 mol%, for example, less than or equal to about 95 mol% based on 100 mol% of the metal excluding lithium in third lithium nickel-based composite oxide. The high nickel-based positive electrode active material may provide high capacity and may be applied to high-capacity, high-density rechargeable lithium batteries.

In the positive electrode active material according to some example embodiments, the weight ratio (A:B) of the second positive electrode active material (A) and the third positive electrode active material (B) may be about 1:10 to about 10:1, for example, about 1:9 to about 9:1, about 1:8 to about 8:1, about 1:7 to about 7:1, about 1:6 to about 6:1, about 1:5 to about 5:1, about 1:4 to about 4:1, about 1:3 to about 3:1, or about 1:2 to about 2:1. When the weight ratio (A:B) of the second positive electrode active material (A) and the third positive electrode active material (B) is in these ranges, the pellet density of the positive electrode active material may increase, the principal stress may decrease, and the powder flow rate may increase. If the weight ratio of the second positive electrode active material and the third positive electrode active material is not in these ranges, the pellet density may decrease, the principal stress may increase, and/or the powder flow rate may decrease.

### Positive Electrode

Embodiments of the present disclosure provide a positive electrode including a positive electrode current collector, and a positive electrode active material layer disposed on the positive electrode current collector and including the aforementioned positive electrode active material.

### Positive Electrode Current Collector

The positive electrode current collector is not limited as long as it has conductivity and does not cause an undesirable chemical change in the rechargeable lithium battery. The positive electrode current collector may be an aluminum foil or a stainless steel foil having a thickness of about 10 µm to about 15 µm.

### Positive Electrode Active Material Layer

The positive electrode active material layer includes the aforementioned positive electrode active material.

Based on 100 wt% of the positive electrode active material layer, the positive electrode active material may be included in an amount of about 60 wt% to about 99.8 wt%, about 70 wt% to about 99.8 wt%, about 80 wt% to about 99.8 wt%, about 90 wt% to about 99.8 wt%, about 90 wt% to about 99 wt%, or about 90 wt% to about 98 wt%.

In some embodiments, the positive electrode active material layer may include a binder, a conductive material, or a combination thereof.

The binder improves binding properties of positive electrode active material particles with one another and with a current collector. Examples of the binder include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like. But the present disclosure is not limited to these examples.

The conductive material is included to provide electrode conductivity and any electrically conductive material that does not cause an undesirable chemical change may be used as a conductive material. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

Based on 100 wt% of the positive electrode active material layer, the binder may be included in an amount of about 0.1 wt% to about 5 wt%, and the conductive material may be included in an amount of about 0.1 wt% to about 5 wt% based on 100 wt% of the positive electrode active material layer.

A loading level of the positive electrode active material layer may be about 10 mg/cm² to about 30 mg/cm², for example about 10 mg/cm² to about 25 mg/cm² or about 10 mg/cm² to about 20 mg/cm². The mixture density of the positive electrode active material layer in the compressed final positive electrode may be about 3.75 g/cc to about 4.0 g/cc, for example, about 3.75 g/cc to about 3.9 g/cc, or about 3.75 g/cc to about 3.85 g/cc. The positive electrode active material is advantageous in realizing such a loading level and mixture density of positive electrode active material layer, and a positive electrode satisfying the loading level and mixture density in the above ranges is advantageous in providing a high-capacity, high-energy-density rechargeable lithium battery.

### Rechargeable Lithium Battery

The rechargeable lithium battery according to some embodiments includes the aforementioned positive electrode, negative electrode, and electrolyte. The rechargeable lithium battery may include a positive electrode, a negative electrode, a separator between the positive electrode and the negative electrode, and an electrolyte.

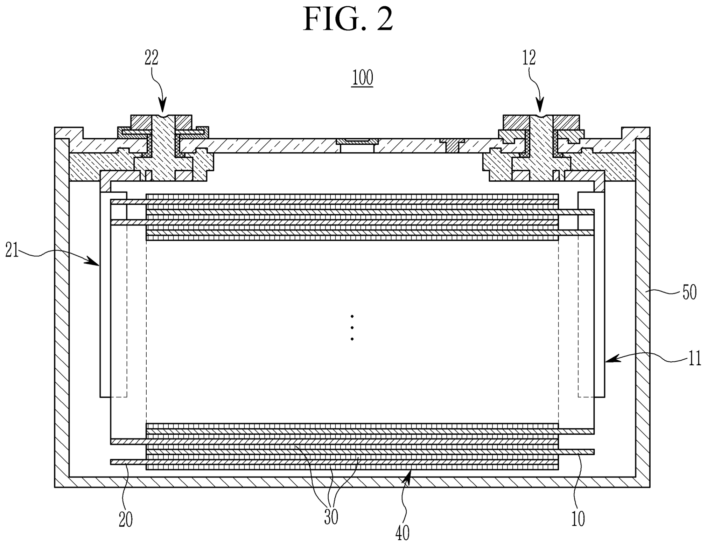

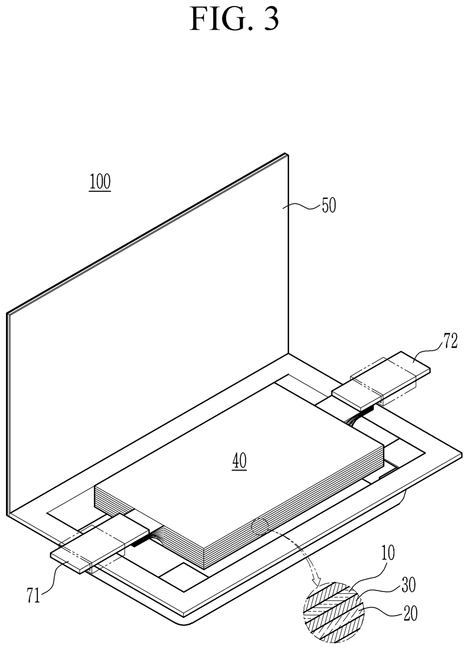

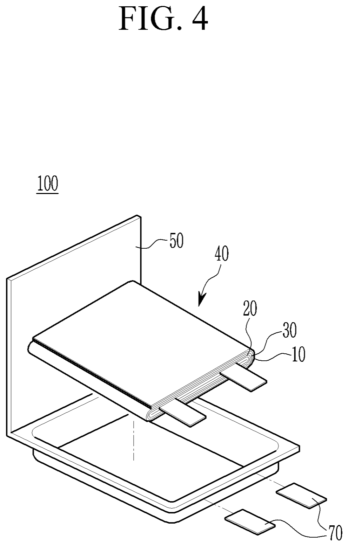

The rechargeable lithium battery may be cylindrical, prismatic, pouch-shaped, coin-shaped, etc. depending on the shape. FIGS. 1 to 4 are schematic diagrams showing the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 that seals the case 50 as shown in FIG. 1. As shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

A rechargeable lithium battery according to embodiments of the present disclosure may having excellent cycle-life characteristics and rate characteristics by including the above-described positive electrode, while also significantly reducing the electrical resistance of the electrode.

### Negative Electrode

The negative electrode for a rechargeable lithium battery includes a negative electrode current collector and a negative electrode active material layer on the negative electrode current collector. The negative electrode active material layer includes a negative electrode active material, and may further include a binder, a conductive material, or a combination thereof.

The negative electrode current collector is not limited as long as it has conductivity and does not cause an undesirable chemical change in the rechargeable lithium battery. In some examples, the negative electrode current collector may be a copper foil having a thickness of about 10 µm to about 15 µm.

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be a carbon-based negative electrode active material, for example, crystalline carbon, amorphous carbon, or a combination thereof. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping lithium may be a Si-based negative electrode active material or a Sn-based negative electrode active material. The Si-based negative electrode active material may be silicon, a silicon-carbon composite, SiOₓ (0<x≤2), a Si-Q alloy, or a combination thereof. In the formula Si-Q, Q is selected from an alkali metal, an alkaline earth metal, a Group 13 element, a Group 14 element (excluding Si), a Group 15 element, a Group 16 element, a transition metal, a rare earth element, and a combination thereof, and for example, selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. The average particle diameter (D₅₀) of the silicon-carbon composite particles may be, for example, about 0.5 µm to about 20 µm. According to some embodiments, the silicon-carbon composite may be in the form of silicon particles with amorphous carbon coated on the surfaces of the silicon particles. For example, the silicon-carbon composite may include secondary particles (core particles) in which silicon primary particles are assembled and an amorphous carbon coating layer (shells) on the surfaces of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. The silicon-carbon composite may include, for example, a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, calcined coke, and the like.

Based on 100 wt% of the silicon-carbon composite when the silicon-carbon composite includes silicon and amorphous carbon, an amount of the silicon may be about 10 wt% to about 50 wt%, and an amount of the amorphous carbon may be about 50 wt% to about 90 wt%. Based on 100 wt% of the silicon-carbon composite when the composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt%.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may be present as silicon alone, in the form of a silicon alloy, or in an oxidized form. The oxidized form of the silicon may be represented as SiOₓ (0<x≤2). The atomic content ratio of Si:O, which indicates the degree of oxidation, may be about 99:1 to about 33:67.

The Si-based negative electrode active material or Sn-based negative electrode active material may be mixed with the carbon-based negative electrode active material. When using a mixture of a Si-based negative electrode active material or a Sn-based negative electrode active material and a carbon-based negative electrode active material, the mixing ratio may be about 1:99 to about 90:10 by weight.

The negative electrode active material may be included in an amount of about 90 wt% to about 99.8 wt%, or about 94 wt% to about 99 wt%, based on 100 wt% of the negative electrode active material layer.

The binder serves to adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity and any electrically conductive material that does not cause an undesirable chemical change may be used as a conductive material. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

Based on 100 wt% of the negative electrode active material layer, an amount of the binder may be about 0.1 wt% to about 5 wt%, and an amount of the conductive material may be about 0.1 wt% to about 5 wt%.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone or in combination of two or more. When two or more types are used in combination, the mixing ratio may be appropriately adjusted depending on intended battery performances, which is widely understood by those working in the relevant field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt include LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is in this range, the electrolyte solution has appropriate ionic conductivity and viscosity, and thus excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, and polytetrafluoroethylene (e.g., TEFLON^{®}), or a copolymer or mixture of two or more thereof. The porous substrate may be formed of glass fibers, or may be a membrane in which the polymer and glass fibers are mixed.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer. In other embodiments, a coating layer including an organic material and a coating layer including an inorganic material may be stacked.

A thickness of the coating layer may be about 0.5 µm to about 20 µm, for example, about 1 µm to about 10 µm, or about 1 µm to about 5 µm.

Examples and comparative examples of the present disclosure are described below. But the present disclosure is not limited to the following examples.

### Example 1

### (1) Preparation of Positive Electrode Active Material

A nickel-based precursor of Ni_{0.916}Co_{0.072}Mn_{0.012}(OH)₂ having a form of secondary particles that are agglomerations of primary particles and have an average particle diameter (D₅₀) of 15 µm and a lithium raw material of LiOH were mixed such that a molar ratio of the total metal amount of the nickel-based precursor to lithium of the lithium raw material was 1:1.05, and the mixture was heat-treated at 750 °C for 10 hours under an oxygen atmosphere to prepare a first positive electrode active material including Li_{1.05}Ni_{0.916}Co_{0.072}Mn_{0.012}O₂ in a form of secondary particles that are agglomerations of primary particles and have an average particle diameter (D₅₀) of 15 µm.

A nickel-based precursor of Ni_{0.916}Co_{0.072}Mn_{0.012}(OH)₂ having a form of single particles having an average particle diameter (D₅₀) of 7 µm and a lithium raw material of LiOH were mixed such that a molar ratio of the total metal amount of the nickel-based precursor to lithium of the lithium raw material was 1:1.05, and the mixture was heat-treated at 730 °C for 10 hours under an oxygen atmosphere to prepare a second positive electrode active material including Li_{1.05}Ni_{0.916}Co_{0.072}Mn_{0.012}O₂ in a form of single particles having an average particle diameter (D₅₀) of 7 µm.

A nickel-based precursor of Ni_{0.916}Co_{0.072}Mn_{0.012}(OH)₂ having a form of single particles having an average particle diameter (D₅₀) of 3 µm and a lithium raw material of LiOH were mixed such that a molar ratio of the total metal amount of the nickel-based precursor to lithium of the lithium raw material was 1:1.05, and the mixture was heat-treated at 710 °C for 10 hours under an oxygen atmosphere to prepare a third positive electrode active material including Li_{1.05}Ni_{0.916}Co_{0.072}Mn_{0.012}O₂ in a form of single particles having an average particle diameter (D₅₀) of 3 µm.

The first positive electrode active material, the second positive electrode active material, and the third positive electrode active material were mixed in a weight ratio of 70:5:25 ( first positive electrode active material to second positive electrode active material to third positive electrode active material) to prepare a positive electrode active material.

### (2) Manufacturing of Rechargeable Lithium Battery Cell

The prepared positive electrode active material, polyvinylidene fluoride as a binder, and carbon nanotube as a conductive material were mixed in a weight ratio of 98.5:1:0.5 (positive electrode active material to binder to conductive material) and then dispersed in N-methylpyrrolidone as a solvent to prepare a positive electrode active material layer slurry. This positive electrode active material layer slurry was coated on an aluminum thin film and then, dried and compressed to make a positive electrode.

The positive electrode was used with a lithium metal counter electrode as a negative electrode, polytetrafluoroethylene as a separator, and an electrolyte solution prepared by mixing ethylene carbonate and dimethyl carbonate in a volume ratio of 3:7 and then dissolving 1M LiPF₆ in the mixed solvent to make a rechargeable lithium battery cell in a conventional method.

### Examples 2 to 3 and Comparative Examples 1 to 6

A positive electrode active material and a rechargeable lithium battery cell were made in the same manner as in Example 1 except that the first positive electrode active material, the second positive electrode active material, and the third positive electrode active material were mixed in each weight ratio shown in Table 1 instead of the weight ratio of 70:5:25 (first positive electrode active material to second positive electrode active material to third positive electrode active material) as in the preparation of positive electrode active material of Example 1.

**Table 1**

| | Weight ratio of positive electrode active materials | | |
|---|---|---|---|
| | First positive electrode active material | Second positive electrode active material | Third positive electrode active material |
| Example 1 | 70 | 5 | 25 |
| Example 2 | 70 | 10 | 20 |
| Example 3 | 70 | 20 | 10 |
| Comparative Example 1 | 80 | - | 20 |
| Comparative Example 2 | 70 | - | 30 |
| Comparative Example 3 | 60 | - | 40 |
| Comparative Example 4 | 70 | 30 | - |
| Comparative Example 5 | 80 | 10 | 10 |
| Comparative Example 6 | 60 | 10 | 30 |

### Evaluation 1: Pellet Density

The pellet density of the positive electrode active materials prepared in Examples 1 to 3 and Comparative Examples 1 to 6 was measured as follows. 3 g of positive electrode active material was placed in a pellet manufacturing mold and maintained 5 tons of pressure for 30 seconds. The density was calculated from the pellet thickness and the diameter of the mold. The results are shown in Table 2 below.

### Evaluation 2: Powder Flow Rate and Principal Stress

The powder flow rate and principal stress of the positive electrode active materials prepared in Examples 1 to 3 and Comparative Examples 1 to 6 were measured as follows.

Using an FT4 Powder Rheometer (Freeman Technologies), the obtained positive electrode active material was added to 200 ml in a 300 ml vessel, the vessel was fixed to the device, and the powder flow rate and principal stress were measured at 9 kPa while moving a blade at a speed of 100 mm/s in a counterclockwise direction. The measurements were performed a total of three times, and the average values were calculated and shown in Table 2.

Here, the powder flow rate is a Flow Function (FF) value calculated based on the flow resistance generated by interactions of powder particles when a blade passes through a powder bed. The Flow Function (FF) is defined by Equation 1 as a value obtained by dividing a major principal stress (σ₁) by an unconfined yield strength (oc) of the powder, and is a dimensionless value representing flow characteristics of the powder. $FF = {σ}_{1} / {σ}_{C}$ where σ₁ may represent a major principal stress when the powder is in a compressed state, and σc may represent an unconfined yield strength at which the powder begins to collapse without external confinement.

### Evaluation 3: Mixture Density

The positive electrode active material layer slurries according to Examples 1 to 3 and Comparative Examples 1 to 6 were coated and dried on an aluminum thin film. To measure maximum mixture density, the coated film was compressed with a pressure until the positive electrodes were broken or the positive electrode active materials were detached. The results are shown in Table 2.

### Evaluation 4: Initial Charge/Discharge Capacity and Efficiency

The rechargeable lithium battery cells of Examples 1 to 3 and Comparative Examples 1 to 6 were measured with respect to initial charge/discharge capacity and efficiency as follows.

The cells were charged to an upper limit voltage of 4.3 V at a constant current of 0.2 C-rate and discharged to a cut-off voltage of 3.0 V at the 0.2C-rate at room temperature (25 °C) for initial charge and discharge. Initial charge/discharge efficiency was calculated according to Equation 2, and the results are shown in Table 2. $Efficiency \left[%\right] = \left[Initial discharge capacity/Initial charge capacity\right] \times 100$

### Evaluation 5: DC Internal Resistance (DC-IR, Direct Current Internal Resistance) Measurement

The rechargeable lithium battery cells of Examples 1 to 3 and Comparative Examples 1 to 6 were measured with respect to direct current internal resistance (DC-IR).

After the initial charge and discharge, the cells were discharged at the 0.2 C-rate for 2 hours and 30 minutes to adjust SOC (state of charge) to 90% or 10% and then constant current-discharged at a 3 C-rate for 10 seconds, at the 0.2 C-rate for 10 seconds, and at the 3 C-rate for 10 seconds, sequentially.

Each direct current internal resistance (DC-IR, R= ΔV/ΔI) was calculated from a ratio of an average voltage change (ΔV) and an average current change (ΔI), while constant current-discharging at each C-rate and then averaged. The results are shown in Table 2.

**Table 2**

| | Pellet density (g/cc) | Principal stress (kPa) | Powder flow rate | Mixture density (g/cc ) | Initial charge capacity (mAh/ g) | Initial discharge capacity (mAh/ g) | Initial charge / discharge efficiency (%) | DC-IR (SOC 10%) | DC-IR (SOC 90%) |
|---|---|---|---|---|---|---|---|---|---|
| Example 1 | 3.61 | 19.52 | 4.55 | 3.78 | 242.6 | 212.6 | 87.6 | 13.5 | 35.1 |
| Example 2 | 3.67 | 13.54 | 4.82 | 3.83 | 242.4 | 212.2 | 87.5 | 11.2 | 30.5 |
| Example 3 | 3.63 | 18.91 | 4.49 | 3.79 | 242.3 | 212.0 | 87.5 | 12.2 | 34.8 |
| Comparative Example 1 | 3.52 | 29.12 | 1.85 | 3.61 | 241.2 | 211.0 | 87.5 | 33.1 | 72.6 |
| Comparative | 3.54 | 29.66 | 2.33 | 3.65 | 240.9 | 210.8 | 87.5 | 30.8 | 70.9 |
| Example 2 | | | | | | | | | |
| Comparative Example 3 | 3.49 | 30.76 | 1.91 | 3.64 | 239.7 | 209.9 | 87.6 | 29.2 | 65.4 |
| Comparative Example 4 | 3.45 | 31.87 | 1.68 | 3.62 | 241.1 | 210.9 | 87.5 | 35.5 | 74.3 |
| Comparative Example 5 | 3.58 | 21.48 | 4.12 | 3.76 | 241.4 | 211.3 | 87.5 | 20.5 | 50.7 |
| Comparative Example 6 | 3.56 | 22.13 | 4.08 | 3.72 | 240.0 | 210.2 | 87.6 | 18.7 | 45.1 |

### Conclusion

In Examples 1 to 3, which included all of the large particles in the form of secondary particles (first positive electrode active material), the medium particles in the form of single particles (second positive electrode active material), and the small particles in the form of single particles (third positive electrode active material), and included the medium particles and the small particles in an amount of greater than 20 wt% and less than 40 wt% based on the total weight of the positive electrode active material, the pellet density was improved to greater than or equal to 3.6 g/cc, the principal stress was reduced to less than or equal to 20 kPa, and the powder flowability was further improved to greater than or equal to 4.2 as compared to the Comparative Examples. As a result, not only were the initial charge/discharge capacity and efficiency improved, but also the DC-IRs at SOC 10% and SOC 90% were significantly lowered, which shows that the resistances was improved.

Meanwhile, Comparative Examples 1 to 4, which did not include medium particles and included only large and small particles or did not include the small particles and included only the large and medium particles alone exhibited lower pellet density than the Examples. In particular, the Comparative Examples had significantly larger principal stress and at least twice lower powder flow rate than the examples, which confirmed insufficient powder flowability, thereby providing for lower initial charge/discharge capacity than the Examples. In addition, the Comparative Examples exhibited about twice higher DC-IR at SOC 10% and SOC 90% than the Examples, which shows the Comparative Examples had significantly inferior resistance as compared to the Examples.

Comparative Examples 5 and 6, which included all the large, medium, and small particles and only the medium and small particles in an amount of less than or equal to 20 wt% or greater than or equal to 40 wt% based on a total weight of the positive electrode active material exhibited much improved pellet density, principal stress, and powder flow rate as compared to the other comparative examples. But the Comparative Examples 5 and 6 had inferior pellet density, principal stress, and powder flow rate as compared to the Examples and thereby had inferior initial charge/discharge capacity and efficiency, particularly, about one time higher DC-IR at SOC 10% and SOC 90% than the Examples. Thus, the Comparative Examples had inferior resistance as compared to the examples.

Accordingly, it can be seen that pellet density, principal stress, and a powder flow rate were improved by including large particles, medium particles, and small particles having an average particle diameter within each range disclosed herein and adjusting amounts of the medium particles and the small particles within each range based on the total weight of the positive electrode active material. Thus, initial charge/discharge capacity efficiency, and resistance may all be improved.

While this disclosure has been described in connection with what is presently considered to be practical example embodiments, it is to be understood that the disclosure is not limited to the disclosed embodiments. Rather, the disclosure includes various modifications and equivalent arrangements.

## Claims

1. A positive electrode active material comprising:
a first positive electrode active material having an average particle diameter (D₅₀) of greater than or equal to 10 µm and less than or equal to 30 µm, the first positive electrode active material comprising a first lithium nickel-based composite oxide,
a second positive electrode active material having an average particle diameter (D₅₀) of greater than or equal to 5 µm and less than 10 µm, the second positive electrode active material comprising a second lithium nickel-based composite oxide, and
a third positive electrode active material having an average particle diameter (D₅₀) of greater than or equal to 0.1 µm and less than 5 µm, the third positive electrode active material comprising a third lithium nickel-based composite oxide,
wherein, based on a total weight of the positive electrode active material, a sum weight of the second positive electrode active material and the third positive electrode active material is greater than 20 wt% and less than 40 wt%, and
wherein a powder flow rate measured at 9 kPa using rheometer by adding 200 ml of the positive electrode active material to a 300 ml vessel, fixing the vessel to a device, and moving a blade counterclockwise at a speed of 100 mm/s is greater than or equal to 4.2.

2. The positive electrode active material as claimed in claim 1, wherein the positive electrode active material has a pellet density of 3.6 g/cc to 4 g/cc as determined from a pellet thickness and a diameter of the mold after placing 3 g of the positive electrode active material in a pellet manufacturing mold and maintaining 5 tons pressure on the positive electrode active material for 30 seconds.

3. The positive electrode active material as claimed in claim 1 or claim 2, wherein a principal stress measured at 9 kPa using a rheometer by adding 200 ml of the positive electrode active material to a 300 ml vessel, fixing the vessel to a device, and moving a blade counterclockwise at a speed of 100 mm/s is less than or equal to 20 kPa.

4. The positive electrode active material as claimed in any one of claims 1 to 3, wherein the first positive electrode active material is in a form of secondary particles that are agglomerations of primary particles.

5. The positive electrode active material as claimed in any one of claims 1 to 4, wherein the second positive electrode active material is in a form of single particles and the third positive electrode active material is in a form of single particles.

6. The positive electrode active material as claimed in any one of claims 1 to 5, wherein the first lithium nickel-based composite oxide is represented:
Liₐ₁Niₓ₁M¹_{y1}M²_{z1}O_{2-b1}X_{b1}
where 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are different from each other and are each Al, B, Ba, Ca, Ce, Co, Cr, Cu, Fe, Mg, Mn, Mo, Nb, Si, Sn, Sr, Ta, Ti, V, W, Y, Zn, Zr, or a combination thereof, and X is F, P, S, or a combination thereof.

7. The positive electrode active material as claimed in any one of claims 1 to 6, wherein the second lithium nickel-based composite oxide is represented:
Liₐ₂Niₓ₂M³_{y2}M⁴_{z2}O_{2-b2}X_{b2}
where 0.9≤a2≤1.8, 0.3≤x2≤1, 0≤y2≤0.7, 0≤z2≤0.7, 0.9≤x2 + y2 + z2≤1.1, and 0≤b2≤0.1, M³ and M⁴ are different form each other and are each Al, B, Ba, Ca, Ce, Co, Cr, Cu, Fe, Mg, Mn, Mo, Nb, Si, Sn, Sr, Ta, Ti, V, W, Y, Zn, Zr, or a combination thereof, and X is F, P, S, or a combination thereof.

8. The positive electrode active material as claimed in any one of claims 1 to 7, wherein the third lithium nickel-based composite oxide is represented by:
Liₐ₃Niₓ₃M⁵_{y3}M⁶_{z3}O_{2-b3}X_{b3}
where 0.9≤a3≤1.8, 0.3≤x3≤1, 0≤y3≤0.7, 0≤z3≤0.7, 0.9≤x3+y3+z3≤1.1, and 0≤b3≤0.1, M⁵ and M⁶ are different from each other and are each Al, B, Ba, Ca, Ce, Co, Cr, Cu, Fe, Mg, Mn, Mo, Nb, Si, Sn, Sr, Ta, Ti, V, W, Y, Zn, Zr, or a combination thereof, and X is F, P, S, or a combination thereof.

9. The positive electrode active material as claimed in any one of claims 1 to 8, wherein, based on 100 mol% of metal excluding lithium in the first lithium nickel-based composite oxide, an amount of nickel is greater than or equal to 80 mol%.

10. The positive electrode active material as claimed in any one of claims 1 to 8, wherein, based on 100 mol% of metal excluding lithium in the second lithium nickel-based composite oxide, an amount of nickel is greater than or equal to 80 mol%.

11. The positive electrode active material as claimed in any one of claims 1 to 8, wherein, based on 100 mol% of metal excluding lithium in the third lithium nickel-based composite oxide, a nickel content is greater than or equal to 80 mol%.

12. The positive electrode active material as claimed in any one of claims 1 to 11, wherein, based on a total weight of the positive electrode active material, the first positive electrode active material is included in an amount of greater than 60 wt% and less than 80 wt%.

13. The positive electrode active material as claimed in any one of claims 1 to 12, wherein a weight ratio of the second positive electrode active material to the third positive electrode active material is 1:10 to 10:1.

14. A positive electrode, comprising
a positive electrode current collector, and
a positive electrode active material layer disposed on the positive electrode current collector and comprising a positive electrode active material as claimed in any one of claims 1 to 13.

15. A rechargeable lithium battery comprising the positive electrode as claimed in claim 14, a negative electrode, and an electrolyte.
